# EUROPEAN PATENT SPECIFICATION

(11) **EP 1 735 251 B1**
(45) Date of publication and mention of the grant of the patent: **17.11.2010**
(21) Application number: 05725893.1
(22) Date of filing: 18.03.2005
(51) Int. Cl.: C03C 17/38, C03C 17/42, B65G 49/06, C09D 5/00, B65D 85/48

(54) **METHOD OF MAKING COATED GLASS ARTICLE, AND INTERMEDIATE PRODUCT USED IN SAME**
VERFAHREN ZUR HERSTELLUNG EINES BESCHICHTETEN GLASARTIKELS UND DABEI VERWENDETES ZWISCHENPRODUKT
PROCEDE POUR FABRIQUER UN ARTICLE EN VERRE PROTEGE, ET PRODUIT INTERMEDIAIRE UTILISE DANS LEDIT PROCEDE

(30) Priority: 29.03.2004 US 811309
(43) Date of publication of application: 27.12.2006
(73) Proprietor: Guardian Industries Corp., Auburn Hills, MI 48326-1714 (US)
(72) Inventor: RICHARDSON, Cory, Flat Rock, MI 48134 (US); THOMSEN, Scott, V., South Lyon, MI 48178 (US)
(74) Representative: Hess, Peter K. G.
(86) International application number: PCT/US2005/009088
(87) International publication number: WO 2005/100276

(56) References cited:
- EP-A- 1 371 702
- DE-A1- 19 745 183
- FR-A- 2 272 961

## Description

This invention in certain example instances relates to a method of making a window unit. In certain example instances, a temporary protective polymer based layer is formed on a coated glass substrate to protect the low-E coating thereof during transport, cutting, edge searning, washing and handling prior to heat treatment (e.g., thermal tempering). Typically, the temporary protective layer is easily removed by peeling it off prior to heat treatment.

### BACKGROUND OF THE INVENTION

It is known in the art to use coated articles in the context of window units such as insulating glass (IG) window units. For example, see U.S. Patent No. 6,632,491, the disclosure of which is hereby incorporated herein by reference. In the '491 Patent for example, a solar management coating (e.g., low-E coating) is provided on the inner surface of one of the glass substrates of an IG window unit so as to protect a building interior against infrared (IR) radiation and the heat generated thereby. Coated glass substrates of IG units often have to be heat treated (e.g., tempered), prior to IG unit assembly, to meet certain code requirements.

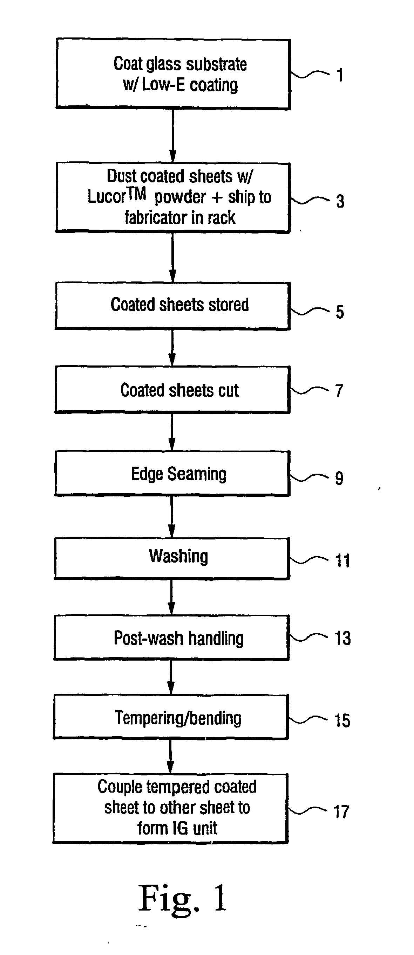

Fig. 1 is a flowchart illustrating processing steps carried out during the conventional manufacture of an IG window unit. First, a glass substrate is coated with a low-E coating (step 1). The low-E coating is typically a multi-layer coating which includes at least one IR reflecting layer of a material such as silver that is sandwiched between at least a pair of dielectric layers. The coating is typically applied via sputtering or the like. After the coating is applied to the glass substrate, the coated sheet is dusted with Lucor^{™} powder for purposes of protection (step 3). As is known in the art, the Lucor powder helps separate the coated sheets from one another during shipment to an IG unit fabricator, because during shipment a plurality of coated sheets are typically wrapped in a single rack. In particular, the powder is provided in order to reduce the likelihood of damage (scratching) occurring during shipment of the coated sheets.

Once the dusted coated sheets arrive at the IG unit fabricator, the fabricator typically stores the coated sheets in a rack or on a pallet (step 5). When the sheets are ready to be used, the coated sheets are each cut into smaller piece(s) (step 7) and edge seamed (step 9) as known in the art. Following cutting and edge seaming, the coated sheets are washed at a washing station using water and optionally soap of some sort (step 11). Following washing, a post-wash handling period typically occurs where the coated sheet is handled by operators or the like some of which tend to wear gloves (step 13).

Thereafter, the coated sheets are placed in a furnace and are thermally tempered therein (step 15). Thermal tempering at the fabricator typically involves heat treatment of a coated sheet using furnace temperature(s) of at least 580 degrees C, more preferably of at least about 600 degrees C and still more preferably of at least 620 degrees C. An example heat treating furnace temperature is from 600 to 700 degrees C. This tempering and/or bending can take place for a period of at least 4 minutes, at least 5 minutes, or more in different situations.

Unfortunately, the process described above with regard to Fig. 1 is undesirable in that the coated glass sheets are often damaged during the process. Coated glass sheets are sometimes less durable while in the annealed state (i.e., prior to tempering). Thus, the glass sheets provided with low-E coatings thereon are highly susceptible to damage during each of steps 3, 5, 7, 9, 11 and 13 illustrated in Fig. 1. The coated side of the coated sheets are the most vulnerable to damage (e.g., scratching) in this regard.

For example, coated sheets are often scratched due to one or more of:
(a) rubbing up against other sheets or the like during shipment; (b) pliers used by glass handlers during and/or proximate steps 7 and 9; (c) abrasion caused by gloves worn by glass handlers during any of steps 3, 5, 7, 9, 11 and 13; (d) brushes during washing step 11; and (e) other types of rubbing/abrasion caused during any of steps 3, 5, 7, 9, 11, and 13. Additionally, corrosion is also a significant cause of damage and is often caused by high humidity conditions, acid rain, and/or other materials which tend to collect on the coated articles during transport, storage and/or handling.

While the aforesaid types of damage often occur prior to heat treatment (e.g., tempering), the tempering of the coated sheets typically magnifies such damage. For example, a minor bit of corrosion which was caused pre-tempering can lead to a significant blemish upon heat treatment which causes the coated sheet to be scrapped. The same is true for scratch damage because scratches in a coating allow oxidation to occur deep within the coating and possibly at the silver layer(s) during heat treatment (e.g., tempering) since heat treatment is typically conducted in an oxygen-inclusive atmosphere. Thus, the damage to a coated article often tends to be worse following heat treatment. Accordingly, it can be seen that yields appreciably suffer due to pre-HT damage that tends to occur to coated glass sheets.

In view of the above, it can be seen that there exists a need in the art to better protect coated glass sheets in the processing stages prior to heat treatment (e.g., prior to tempering). In particular, increased protection against mechanical abrasion and environmental damage is needed. Over the years, numerous attempts have been made in this regard.

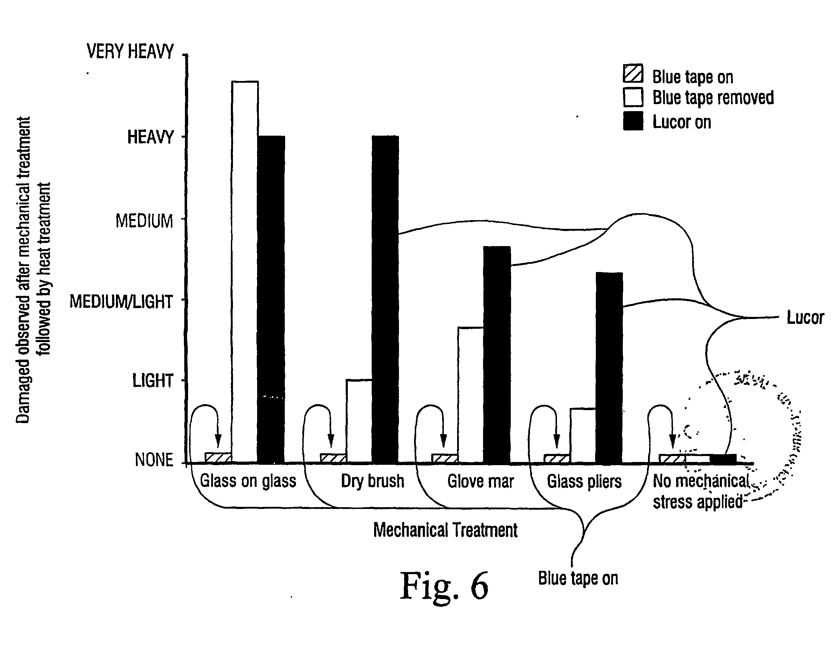

The dusting of coated sheets with Lucor powder separator is carried out in an attempt to better protect coated glass sheets in the processing stages prior to heat treatment. Unfortunately, Lucor powder provides no protection against corrosion damage, and also is not particularly effective in protecting against scratch damage due to the use of pliers, brushes, gloves and the like (e.g., see Fig. 6).

Encapsulating of racks during shipment has also been tried. However, encapsulating racks is labor intensive and has proven only partially effective during shipment. Moreover, it provides no practical protection during cutting, edge seaming, washing, and post-wash handling processing.

Special processing requirements are also undesirable since this severely limits the number of fabricators capable of performing such processing. Moreover, this significantly adds to the cost of fabrication and is highly undesirable in this regard.

Sacrificial lites (or glazings) have been used during shipment in an attempt to solve the aforesaid problems. In particular, glass sheets are run through the coater with the coater turned off and are subsequently loaded onto the shipping rack at an end thereof with the rack thereafter being wrapped for protection. Because the sacrificial lite is located at the end of the rack, some marginal protection to the other lites in the rack is afforded during shipment. The sacrificial lites are discarded at the fabricator. However, this technique is undesirable in that it requires coater downtime, wasting of glass, and wasting of shipping volume/space/weight, all of which lead to significantly cost increases.

U.S. Patent No. 6,682,773 to Medwick discloses a technique where a water-soluble temporary protective layer is applied to a coated glass sheet via a liquid solution. In particular, the protective layer is the reaction product of an aqueous coating composition containing a polyvinyl alcohol polymer which is then cured and may thereafter be removed by washing in water. Unfortunately, the technique of the '773 Patent is highly undesirable in that: (a) the coating is applied in liquid form and thus has to be cured using a sophisticated heat drying process which takes up valuable time and space; and (b) the coating is typically water soluble and is removed by washing thereby leaving the coated sheet exposed to potential damage during post-wash handling and/or processing. Thus, it can be seen that the technique of the '773 Patent is highly undesirable.

US patent application no. 2002/0176988 A1 discloses a similar method for protecting a coated glass sheet as Medwick. According to the US '988 a removable protective coating is deposited over a coated glass substrate, for temporarily protecting the substrate during shipping, handling or storage. The protective coating is for example an evaporation or reaction product of an aqueous coating composition containing a polyvinyl alcohol polymer. In another embodiment, the protective coating is formed by sputtering a carbon coating on to the substrate. Similar to the disadvantages associated with Medwick, also the coating of US '988 is applied in liquid form and has to be cured, which requires a further processing step, increasing the costs and time effort needed to produce the protective coating.

U.S. Patent No. 6,461,731 discloses a protective diamond-like carbon (DLC) layer provided over a low-E coating. However, the DLC layer of the '731 Patent cannot practically and reasonably be removed prior to tempering.

U.S. Patent No. 4,710,426 discloses a protective polymeric layer on a coated sheet. However, the isocyanate used in the '426 system prevents the protective polymeric layer from being practically removed in a reasonable manner.

In view of the above, it can be seen that there exists a need in the art to better protect coated glass sheets in the processing stages prior to heat treatment (e.g., prior to tempering) in an efficient manner such that a projective laver(s) can be easily removed in a processing step prior to tempering. In particular, increased protection against mechanical abrasion and environmental damage is needed in steps leading up to heat treatment (e.g., thermal tempering).

### BRIEF SUMMARY OF EXAMPLE EMBODIMENTS OF THE INVENTION

In embodiments of this invention, a temporary protective coating is provided on a glass substrate that is coated with a multi-layer low-E coating. The temporary protective coating includes one or more layers and is located on the glass substrate over at least the low-E coating.

In inventive embodiments, the temporary protective coating is designed such that it can be applied over a low-E coating in an efficient manner without the need for any sort of lengthy curing procedure. In this regard, the temporary protective coating is applied in solid form (i.e., as opposed to liquid form) so that no significant curing is needed. Moreover, in embodiments of this invention, the temporary protective coating is designed such that it can be easily removed by simply peeling it off just prior to heat treatment (e.g., just prior to tempering). In certain example embodiments, the temporary protective coating is designed such that it is not water soluble so that it remains on and protects the low-E coated glass substrate during washing step(s) and thereafter during at least some post-wash handling step(s).

According to this invention, there is provided a method of making a window unit, the method comprising: sputtering a multi-layered low-E coating onto a glass substrate, wherein the low-E coating comprises at least one infrared (IR) reflecting layer sandwiched between at least first and second dielectric layers; adhering a protective solid Alexible sheet in non-liquid form to a top surface of the low-E coating by means of an adhesive to form a protected coated article, wherein the adhesive is a pressure sensitive adhesive (PSA) comprising an acrylic based material and the protective, solid flexible sheet comprises polyethylene, following adhering of the protective sheet to the top surface of the low-E coating, cutting the protected coated article into at least one shape and size with the protective sheet thereon, and thereafter washing the protected coated article with the protective sheet thereon, so that following the cutting and washing the protective sheet remains adhered to the top surface of the low-E coating; following said cutting and washing, peeling the protective sheet off of the top surface of the low-E coating to form an unprotected coated article; after peeling the protective sheet off of the top surface of the low-E coating, inserting the unprotected coated article into a furnace and heat treating the unprotected coated article including the glass substrate and low-E coating in the furnace; and after said tempering, using the tempered coated article in making a window unit.

### BRIEF DESCRIPTION OF THE DRAWINGS

FIGURE 1 is a flowchart illustrating a conventional method of making an IG window unit.

FIGURE 2 is a cross sectional view of a coated article according to an example embodiment of this invention.

FIGURE 3 is a flowchart illustrating certain example steps performed in an example embodiment of this invention.

FIGURE 4 is a cross section view of an IG unit coated article according to an example embodiment of this invention.

FIGURE 5 is a cross sectional view of a coated article according to an example embodiment of this invention.

FIGURE 6 is a graph illustrating improved mechanical durability associated with certain example embodiments of this invention, compared to conventional articles with only Lucor spacer powder applied.

### DETAILED DESCRIPTION OF EXAMPLE EMBODIMENTS OF THE INVENTION

A temporary protective coating, having one or more layers, is provided on a glass substrate that is coated with a multi-layer low-E coating in embodiments of this invention. The temporary protective coating is typically provided on the substrate over a multi-layer low-E coating, where the low-E coating typically includes at least one infrared (IR) reflecting layer of a material comprising silver or the like. In certain example instances, the IR reflecting layer(s) may be sandwiched between at least a pair of dielectric layers.

According to the invention, the temporary protective coating is designed such that it can be applied over a low-E coating in an efficient manner without the need for any sort of lengthy curing procedure (e.g., without the need for convective air drying, radiant heat drying, convective heat drying, heat drying, vacuum drying, and/or radiation curing such as UV, IR or RF curling). In this regard, the temporary protective coating is applied in solid sheet and/or tape form (i.e., as opposed to liquid form) so that no true curing is needed. For example, the temporary protective coating can be easily applied via lamination or the like in an efficient and reasonable manner.

According to this invention, the temporary protective coating is designed such that it can be easily removed by simply peeling it off just prior to heat treatment (e.g., just prior to tempering). It may be peeled off by hand (by an operator), or alternatively may be peeled off via a robot in certain other embodiments of this invention. Thus, certain example embodiments of this invention allow fabricators to more aggressively handle and/or process coated glass sheets prior to heat treatment without running a significant risk of damage. This permits yields to be increased, and costs cut.

It has been found that the use of the protective layer discussed herein allows of yields to be improved by at least 50%, and also allows significant post-HT defects to be reduced by at least 50%, more preferably by at least 75% (e.g., compared to a situation where merely Lucor spacer powder is used as discussed above).

Moreover, surprisingly and unexpectedly, it has been found that the protective layer provides added durability/protection even after it has been removed. It is believed that this may be due to residual material from the adhesive layer which may remain on the coating following peeling off of the protective layer. This residual material from the adhesive layer, left on the coating for durability purposes after removal of the protective layer and most of the adhesive layer, is then burned off during heat treatment so that it does not create optical problems or the like. This residual added durability/protection is highly advantageous in processing/handling which occurs between the time of protective layer removal and heat treatment. This unexpected result represents a significant advantage in the art.

In certain example embodiments, the temporary protective coating is not water soluble so that it remains on and protects the low-E coated glass substrate during washing step(s) and thereafter during at least some post-wash handling step(s). Thus, the coated sheet is not highly susceptible to damage (e.g., scratching and/or corrosion) during washing or during certain post-wash handling procedures.

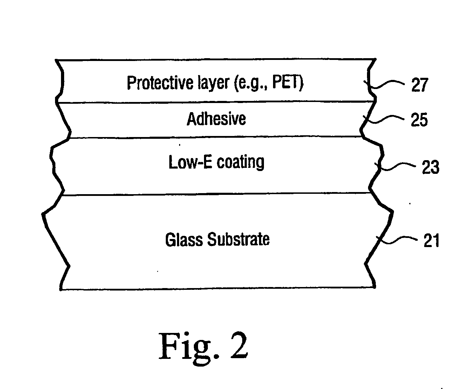

Fig. 2 is a cross sectional view of an intermediate-stage coated article according to an example embodiment of this invention. The coated article of Fig. 2 is referred to as an "intermediate-stage" coated article because it typically exists during only a particular stage of the manufacturing process before the final product is completed and sold. As shown in Fig. 2, the coated article includes a glass substrate 21 which supports a low-E coating 23. Provided on the substrate 21 over the low-E coating is a protective layer(s) 27 that is optionally adhered to the low-E coating via adhesive layer 25.

Low-E coating 23 may be any suitable type of low-E coating in different embodiments of this invention. For example, and without limitation, any of the coatings in any of the following U.S. Patents may be used as the coating 23: 6,461,731; 6,447,891; 6,602,608; 6,576,349; 6,514,620; 6,524,714; 5,688,585; 5,563,734; 5,229,194; 4,413,877 and 3,682,528. In certain example embodiments, the top layer of the low-E coating is of or comprises silicon nitride which may or may not be doped with a metal such as AI and/or stainless steel.

Adhesive 25 is a pressure sensitive adhesive (PSA) in embodiments of this invention. The adhesive layer 25 may be of or comprise an acrylic based material. Adhesive 25 provides a low level of adhesion of the protective layer 27 to the top of the low-E coating in certain embodiments thereby permitting the protective layer 27 and most if not all of the adhesive layer 25 to be easily removed by peeling off when desired. As explained above, it has been surprisingly been found that the protective layer provides added durability/protection even after it has been removed. It is believed that this may be due to residual material from the adhesive layer 25 which may remain on the coating following peeling off of the protective layer 27 and at least part of layer 25. This residual material from the adhesive layer 25, left on the coating for durability purposes after removal of the protective layer and most of the adhesive layer, is then burned off during heat treatment (e.g., tempering) so that it does not create optical problems or the like.

Protective layer 27 is of or comprise polyethylene in embodiments of this invention. In certain Example embodiments of this invention, protective layer 27 has a visible transmission of less than 70% (measured regarding all visible wavelengths of light), more preferably less than 60%, and most preferably less than 50% (thus, the optics of the coated article are undesirable when the protective layer 27 is thereon). In certain example instances, the protective layer 27 may be blue or otherwise colored. The blue or blue/green coloration of layer 27 is advantageous in that it allows edges of the layer 27 to be clearly seen by operators such as peelers, and also permits handlers to be able to easily determine whether or not the protective layer 27 is still on the coated substrate. This is helpful in preventing coated articles with layer 27 thereon from being placed into the heat treating furnace before layer 27 has been removed by peeling or the like. In certain example embodiments of this invention, protective layer 27 is from about 0,0254 - 0,0762 mm (1-3 mils) thick, more preferably about (2 mils) 0,0508 mm thick, and is in solid flexible sheet form so as to be capable of being stored on a roll or the like before application over the low-E coating. In one example embodiment of this invention, layers 25, 27 may be obtained from Nitto Denko, under the tradename 5057A film tape.

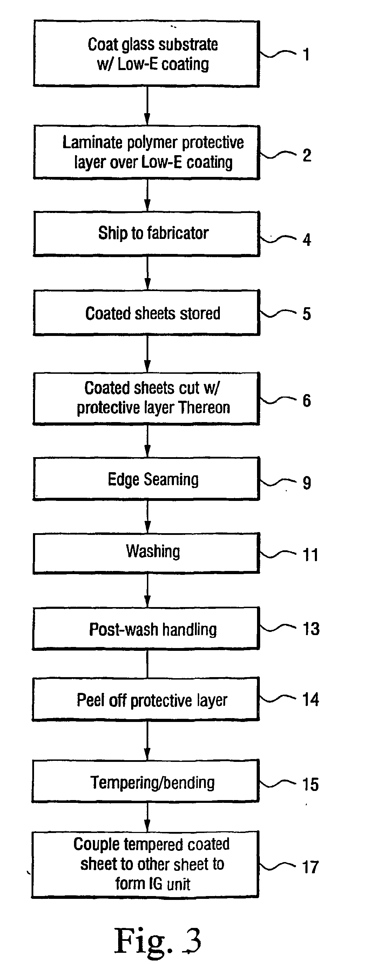

Fig. 3 is a flowchart illustrating certain steps carried out according to an example embodiment of this invention during the manufacture of an IG window unit. First, a glass substrate 21 is coated with a low-E coating 23 (step 1). Example low-E coatings 23 which may be used are discussed above. The low-E coating is typically a multi-layer coating 23 which includes at least one IR reflecting layer of a material such as silver that is sandwiched between at least a pair of dielectric layers. The coating 23 is typically applied via sputtering or the like. After the coating 23 is applied to the glass substrate 21, the sheet-like protective layer 27 is adhered to the top of the low-E coating 23 via pressure sensitive adhesive layer 25 (step 2) to form the coated sheet shown in Fig. 2. In certain example embodiments of this invention, protective layer 27 may be stored on a roll (not shown). In such instances, sheet material 27 fed from the roll may be brought into a nip between a biasing roller (not shown) and the coated article with the low-E coating thereon. In the nip, the roller presses the protective sheet layer 27 downward toward the top of the low-E coating thereby adhering the layer 27 to the top of the low-E coating via adhesive layer 25. In certain example embodiments of this invention the coating is applied at a coated article surface temperature of from 15,5 to 48,9°C (60 to 120 degrees F) more preferably from about 32,2 to 48,8°C (90 to 120 degrees F), and most preferably from about 32,2 to 43,3°C (90-110 degrees F) and sometime at temperatures above 37,7°C (100 degrees F). This is because the coated sheet is at an elevated temperature due to the coater used to apply the low-E coating on the substrate. Alternatively, a bench-top laminator may be used to laminate the protective layer 27 to the low-E coating via adhesive layer 25 using typical lamination technology.

After the protective layer 27 has been applied over the low-E coating, the coated article is positioned in a rack along with a plurality of other such articles, and the rack is thereafter shipped from the coater to the fabricator in the rack (step 4). Optionally, in certain example embodiments of this invention, it is possible to coat or dust the coated articles with Lucor^{™} powder for purposes of protection even after the protective layer 27 has been applied. The Lucor spacer powder may help separate the coated sheets from one another during shipment to an IG unit fabricator.

Once the coated sheets arrive at the IG unit fabricator, the fabricator typically stores the coated sheets in a rack or on a pallet with the protective layer(s) 27 thereon (step 5). When the sheets are ready to be used, the coated sheets are each cut into smaller piece(s) (step 6) and edge seamed (step 9) with the layers 25, 27 still thereon. Following cutting and edge seaming, the coated sheets are washed at a washing station using water and optionally soap of some sort, again with the layers 25, 17 still thereon (step 11). Typically, the protective layer 27 is not water soluble, so that the layer 27 dose not come off during the washing step 11. This is advantageous in that it permits the coated sheet to be protected from abrasion from brushes used during the washing, and also permits the protective layer 27 to continue to protect the coated sheet during post-wash handling 13. Following washing, such a post-wash handling period typically occurs where the coated sheet is handled by operators or the like some of which tend to wear gloves (step 13).

Just before the coated article is to be placed in a heat treating furnace (e.g., Thermal tempering and/or bending furnace), the protective layer 27 and at least part of adhesive layer 25 are peeled off of the coated glass substrate by an operator or robot thereby leaving the low-E coating 23 on the glass substrate 31 (step lot). As explained above, it is possible for residual portions of the adhesive layer 25 to remain on the substrate over the low-E coating even after the peeling off step. As mentioned above, such residual portions of the adhesive layer 25 may help protect the coated article just before and during introduction of the coated article into the furnace. Thereafter, once the coated article comprising the glass substrate with low-E coating thereon is placed in the furnace, the coated article is heat treated sufficiently to thermally temper and/or heat bend the coated article (step 15). Thermal tempering at a fabricator typically involves heat treatment of a coated sheet using furnace temperature(s) of at least 580 degrees C, more preferably of at least about 600 degrees C and still more preferably of at least 620 degrees C. This tempering can take place for a period of at least 4 minutes, at least 5 minutes, or more in different situations.
As mentioned above, during such heat treatment, any residual portion of the adhesive layer 25 is burned off.

Alternatively, it is possible that in certain embodiments of this invention that the protective layer 27 (and at least part of adhesive 25) is peeled off just prior to introduction of the coated sheet into a tempering or bending washer at the fabricator.

The coated article, including substrate 21 and low-E coating 23 in monolithic form, may in certain example embodiments have a visible transmission of at leat 70% after removal of the layers 25, 27, and/or following heat treatment.

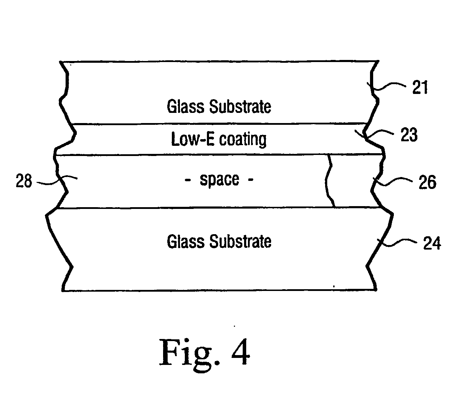

After being heat treated, the coated sheet is coupled to another glass or plastic sheet via at least one spacer and/or sealant to form an IG window unit (step 17). Typically, an IG window unit may include two spaced apart substrates 21, 24 as shown in Fig. 4. Example IG window units are illustrated and described, for example, in U.S. Patent Nos. 5,770,321, 5,800,933, 6,524,714, 6,541,084 and US 2003/0150711. Fig. 4 illustrate that an example IG window unit may include the coated glass substrate including glass substrate 21 and coating 23 coupled to another glass substrate 24 via spacer(s) 26, sealant(s) or the like with a gap 28 being defined therebetween. This gap 28 between the substrates in IG unit embodiments may in certain instances be filled with a gas such as argon (Ar), or alternatively may be filled with air. An example IG unit may comprise a pair of spaced apart clear glass substrates each about 4 mm thick, one of which is coated with a coating herein in certain example instances, where the gap between the substrates may be from about 5 to 30 mm, more preferably from about 10 to 20 mm, and most preferably about 16 mm. In certain example IG unit embodiments of this invention, the coating is designed such that the resulting IG unit (e.g., with, for reference purposes, a pair of 4 mm clear glass substrates spaced apart by 16 mm with Ar gas in the gap) has a U-value of no greater than 1.25 W/(m²K), more preferably no greater than 1.20 W/(m²K), even more preferably no greater than 1.15 W/(m²K), and most preferably no greater than 1.10 W/(m²K). The IG window unit may have a visible transmission of from 50-80% in certain example embodiments of this invention, more preferably from 60-75%.

In view of the above, it can be seen that the protective layer 27, and optionally adhesive 25, serve to protect the coated sheet from damage (e.g., scratching, corrosion and the like) during shipping, unloading, cutting, edge seaming and grinding, robotic handling and human handling. An example benefit is significantly higher fabrication yields for the product. While such protective layers have been previously used to protect UV coatings and the like during shipment, they have not been heretofore used to protect low-E coatings during fabrication steps and the like as discussed herein.

### EXAMPLE

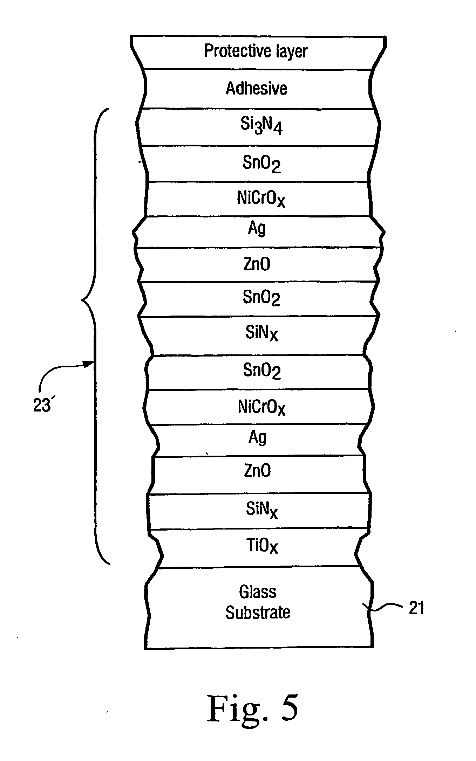

For purposes of example only, and without limitation, an Example coated article was made and tested. Preferring to Fig. 5, a low-E coating 23' was sputtered onto a glass substrate 21. The materials used for the low-E coating 23' are listed below, in order to the glass substrate outwardly; and the approximate thicknesses in the Example are listed in the right-hand column.

| Example Materials/Thicknesses for Low-E Coating 23' | | | |
|---|---|---|---|
| Layer | Preferred Range (Ǻ) | More Preferred (Ǻ) | Example (Å) |
| Glass | | | |
| TiO₂ | 10-150 Å | 20-125 Å | 121 Å |
| SiₓN_{y} | 40-450 Å | 70-300 Å | n/a Å |
| ZnOₓ | 10-300 Å | 40-150 Å | 90 Å |
| Ag | 50-250 Ǻ | 80-120 Ǻ | 92 Å |
| NiCrOₓ | 10-100 Ǻ | 12-40 Ǻ | 37 Å |
| SnO₂ | 0-1,000 Å | 200-700 Å | 597 Å |
| SiₓN_{y} | 50-450 Ǻ | 80-200 Ǻ | n/a Å |
| SnO₂ | 30-250 Å | 50-200 Å | 100 Å |
| ZnOₓ | 10-300 Å | 40-150 Ǻ | 100 Å |
| Ag | 50-250 Ǻ | 80-220 Ǻ | 147 Å |
| NiCrOₓ | 10-100 Ǻ | 20-45 Ǻ | 36 Å |
| SnO₂ | 0-750 Å | 40-200 Å | 100 Å |
| Si₃N₄ | 0-750 Ǻ | 80-320 Ǻ | 208 Å |

Further details, advantages, and characteristics of this low-E coating 23', may be found in U.S. Serial No. 10/797,561. It has surprisingly been found that adherence characteristics between the adhesive 25 and silicon nitride (the top layer of the aforesaid low-E coating) are very good.

Following sputtering of coating 23' onto glass substrate 21, polyethylene protective layer 25 was adhered to the top of the low-E coating via acrylic based adhesive layer 25. In this regard, 5057A blue colored tape from Nitto Denko was used. This coated sheet including layers 25, 27 according to the Example was then subjected to numerous tests, and compared to each of: (a) the same coating not ever covered with layers 25, 27, and (b) the same coating which had previously been covered with similar layers 25, 27 but where the layers had been peeled off. The results of such tests are illustrated in Fig. 6.

Regarding the various tests illustrated in Fig. 6, the dry brush test was an abrasion test where a dry brush was used to rub the coated sheet in order to simulate a situation where water was unexpectedly cut off in a coated sheet washer. The glove mar test was an abrasion test using a rubbing material similar to that commonly used in gloves of glass handlers. The glass pliers test involved subjected the coated sheet to contact with glass handling pliers.

Fig. 6 shows that the coated sheets with the layers 25, 27 thereon were much less damaged by the various abrasion tests than were the coated articles without such layers thereon. Surprisingly, Fig. 6 also illustrates that the protective layer provides added durability/protection even after it has been removed (see the "blue tape removed" samples illustrated via the light colored bars in Fig. 6). It is believed that this may be due to residual material from the adhesive layer which may remain on the coating following peeling off of the protective layer. This added durability/protection is highly advantageous especially in the context of processing/handling which occurs between the time of protective layer removal and heat treatment.

Thus, in certain example embodiments, an unprotected coated article, after peeling off of the protective sheet and at least part of the adhesive layer, is at least 3 times more resistant (more preferably at least 5 times more resistant) to scratching via an abrasion brush test and/or glove mar test than is a comparative coated article including the glass substrate and low-E coating which never had applied thereto the adhesive layer and protective sheet.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

## Claims

1. A method of making a window unit, the method comprising:
sputtering a multi-layered low-E coating onto a glass substrate, wherein the low-E coating comprises at least one infrared (IR) reflecting layer sandwiched between at least first and second dielectric layers;
adhering a protective, solid flexible sheet in non-liquid form to a top surface of the lowE coating by means of an adhesive, to form a protected coated article, wherein the adhesive is a pressure sensitive adhesive (PSA) comprising an acrylic based material and the protective, solid flexible sheet comprises polyethylene;
following adhering of the protective sheet to the top surface of the lowE coating, cutting the protected coated article into at least one shape and size with the protective sheet thereon, and thereafter washing the protected coated article with the protective sheet thereon, so that following the cutting and washing the protective sheet remains adhered to the top surface of the low-E coating;
following said cutting and washing, peeling the protective sheet off of the top surface of the low-E coating to form an unprotected coated article;
after peeling the protective sheet off of the top surface of the low-E coating, inserting the unprotected coated article into a furnace and heat treating the unprotected coated article including the glass substrate and low-E coating in the furnace; and
after said tempering, using the tempered coated article in making a window unit.

2. The method of claim 1, wherein an uppermost layer of the low-E coating comprises silicon nitride, wherein the protective sheet is adhered to the layer comprising silicon nitride via the adhesive layer.

3. The method of claim 1, wherein the protective sheet has a visible transmission of less than 70%.

4. The method of claim 1, wherein the window unit has a visible transmission of from 60 to 75%.

5. The method of claim 1, wherein the protective sheet is blue and/or green colored.

6. The method of claim 1, where the unprotected coated article, after peeling off of the protective sheet, is at least 3 times more resistant to scratching via an abrasion test than is a comparative coated article including the glass substrate and low-E coating which never had applied thereto the protective sheet.

7. The method of claim 1, where the unprotected coated article, after peeling off of the protective sheet, is at least 5 times more resistant to scratching via an abrasion test than is a comparative coated article including the glass substrate and low-E coating which never had applied thereto the protective sheet.

## Patentansprüche

1. Ein Verfahren zur Herstellung einer Fenstereinheit welches Verfahren die folgenden Schritte umfasst:
Sputterbeschichten einer mehrschichtigen Low-E Beschichtung auf ein Glassubstrat, wobei die Low-E Beschichtung zumindest eine Infrarot (IR) reflektierende Schicht umfasst, die zwischen zumindest ersten und zweiten dielektrischen Schichten sandwichartig angeordnet ist;
Anbringen einer schützenden, soliden, flexiblen Folie in nicht flüssiger Form auf eine obere Oberfläche der Low-E Beschichtung mittels eines Klebstoffs um einen geschützten beschichteten Gegenstand zu bilden, wobei der Klebstoff ein drucksensitiver Klebstoff (pressure sensitive adhesive (PSA)) umfassend ein acrylbasiertes Material ist und wobei die schützende, solide, flexible Folie Polyethylen umfasst;
nach dem Ankleben der schützenden Folie auf die Oberfläche der Low-E Beschichtung Schneiden des geschützten beschichteten Gegenstands in zumindest eine Form und Größe mit der schützenden Folie darauf und danach Waschen des geschützten beschichteten Gegenstands mit der schützenden Folie darauf, so dass nach dem Schneiden und Waschen die schützende Folie auf der oberen Oberfläche der Low-E Beschichtung klebend verbleibt;
wobei nach dem Schneiden und Waschen die schützende Folie von der oberen Oberfläche der Low-E Beschichtung entfernt wird, um einen ungeschützten beschichteten Gegenstand zu bilden;
nach dem Entfernen der schützenden Folie von der oberen Oberfläche der Low-E Beschichtung Einführen des ungeschützten beschichteten Gegenstands in einen Ofen und Wärmebehandeln des ungeschützten beschichteten Gegenstands umfassend das Glassubstrat und die Low-E Beschichtung in dem Ofen; und
nach besagtem Tempern, Verwenden des getemperten beschichteten Gegenstands in der Herstellung einer Fenstereinheit.

2. Das Verfahren nach Anspruch 1, wobei die oberste Schicht der Low-E Beschichtung Siliziumnitrid umfasst, wobei die schützende Folie an der Schicht umfassend Siliziumnitrid mittels der Klebstoffschicht geklebt ist.

3. Das Verfahren nach Anspruch 1, wobei die schützende Folie eine sichtbare Transmission von weniger als 70 % aufweist.

4. Das Verfahren nach Anspruch 1, wobei die Fenstereinheit eine sichtbare Transmission von 60 - 75 % aufweist.

5. Das Verfahren nach Anspruch 1, wobei die schützende Folie blau und/oder grün gefärbt ist.

6. Das Verfahren nach Anspruch 1, wobei der ungeschützte beschichtete Gegenstand nach der Entfernung der schützenden Folie zumindest dreimal so widerstandsfähig gegenüber einem Kratzen in einem Abriebtest ist, als ein vergleichbarer beschichteter Gegenstand umfassend das Glassubstrat und die Low-E Beschichtung, bei welchem nie die schützende Folie angewandt wurde.

7. Das Verfahren nach Anspruch 1, wobei der ungeschützte beschichtete Gegenstand nach der Entfernung der schützenden Folie zumindest fünfmal so widerstandsfähig gegenüber Kratzern in einem Abriebtest ist als ein vergleichbarer beschichteter Gegenstand umfassend das Glassubstrat und die Low-E Beschichtung, bei welchem die schützende Folie nie angewandt wurde.

## Revendications

1. Un procédé de fabrication d'un ensemble de vitre, le procédé comprenant :
pulvériser un revêtement à faible émissivité multicouche sur un substrat de verre, où le revêtement à faible émissivité comprend au moins une couche réfléchissant l'infrarouge (IR) prise en sandwich entre au moins une première et une seconde couche diélectriques,
faire adhérer une feuille flexible solide protectrice sous forme non liquide pour former une surface supérieure du revêtement à faible émissivité au moyen d'un adhésif, afin de former un article revêtu protégé, où l'adhésif est un adhésif sensible à la pression (PSA) comprenant un matériau à base acrylique et la feuille flexible solide protectrice comprend du polyéthylène ;
après avoir fait adhérer la feuille protectrice sur la surface supérieure du revêtement à faible émissivité, découper l'article revêtu protégé selon au moins une forme et une dimension avec la feuille protectrice dessus, et ensuite laver l'article revêtu protégé avec la feuille protectrice dessus, de sorte qu'après la découpe et le lavage la feuille protectrice continue à adhérer à la surface supérieure du revêtement à faible émissivité ;
à la suite de ladite découpe et dudit lavage, retirer par pelage la feuille protectrice de la surface supérieure du revêtement à faible émissivité afin de former un article revêtu non protégé ;
après retrait par pelage de la feuille protectrice de la surface supérieure du revêtement à faible émissivité, insertion de l'article revêtu non protégé dans un four et traitement thermique de l'article revêtu non protégé incluant le substrat de verre et le revêtement à faible émissivité dans le four ; et après ladite trempe, utilisation de l'article revêtu trempé pour réaliser une unité de vitrage.

2. Le procédé de la revendication 1, dans lequel une couche extrême supérieure du revêtement à faible émissivité comprend du nitrure de silicium, dans lequel on fait adhérer la feuille protectrice sur la couche comprenant du nitrure de silicium via la couche adhésive.

3. Le procédé de la revendication 1, dans lequel la couche protectrice présente une transmission dans le visible inférieure à 70 %.

4. Le procédé de la revendication 1, dans lequel l'ensemble de vitre possède une transmission dans le visible allant de 60 à 75 %.

5. Le procédé de la revendication 1, dans lequel la feuille protectrice est colorée en bleu et/ou en vert.

6. Le procédé de la revendication 1, dans lequel l'article revêtu non protégé, après retrait par pelage de la feuille protectrice, est au moins 3 fois plus résistant aux rayures suivant un test d'abrasion que ne l'est un article revêtu comparatif incluant le substrat de verre et le revêtement à faible émissivité et auquel la feuille protectrice n'a jamais été appliquée.

7. Le procédé de la revendication 1, dans lequel l'article revêtu non protégé, après retrait par pelage de la feuille protectrice, est au moins 5 fois plus résistant aux rayures suivant un test d'abrasion que ne l'est un article revêtu comparatif incluant le substrat de verre et le revêtement à faible émissivité et auquel la feuille protectrice n'a jamais été appliquée.
